# EUROPÄISCHE PATENTSCHRIFT

(11) **EP 2 959 282 B1**
(45) Veröffentlichungstag und Bekanntmachung des Hinweises auf die Patenterteilung: **12.12.2018**
(21) Anmeldenummer: 14708474.3
(22) Anmeldetag: 04.02.2014
(51) Int. Cl.: G01M 3/36, B29C 65/02, B29C 65/00, B29C 65/82, B29L 23/20

(54) **VERFAHREN UND VORRICHTUNG ZUR DICHTIGKEITSKONTROLLE EINES BEHÄLTNISSES**
METHOD AND DEVICE FOR CONTROLLING THE TIGHTNESS OF A CONTAINER
PROCÉDÉ ET DISPOSITIF DE CONTRÔLE D'ÉTANCHÉITÉ D'UN RÉCIPIENT

(30) Priorität: 20.02.2013 DE 102013002856
(43) Veröffentlichungstag der Anmeldung: 30.12.2015
(73) Patentinhaber: IWK Verpackungstechnik GmbH, 76297 Stutensee (DE)
(72) Erfinder: HESSE, Fabian, 76137 Karlsruhe (DE)
(74) Vertreter: Lichti - Patentanwälte Partnerschaft mbB
(86) Internationale Anmeldenummer: PCT/EP2014/000283
(87) Internationale Veröffentlichungsnummer: WO 2014/127885

(56) Entgegenhaltungen:
- EP-A1- 0 661 212
- GB-A- 2 055 736
- JP-A- H05 281 079
- US-A- 5 127 260
- DEVRIJEREN J ET AL: "Verbeterde testmogelijkheid van lasnaden in HDPE folie", PLASTICA,, Bd. 36, Nr. 3, 1. März 1983 (1983-03-01), XP001353672,

## Beschreibung

Die Erfindung betrifft ein Verfahren zur Dichtigkeitskontrolle eines Behältnisses, das eine schlauch- oder rohrförmige Hülle aufweist, die gegenüber der umgebenen Atmosphäre verschlossen ist und an zumindest einem Ende eine Schweißnaht besitzt, wobei der Innendruck in einem Innenraum eines Behältnisses durch äußere Einwirkung erhöht und die sich dabei einstellende Verformung der Schweißnaht erfasst wird.

Desweiteren betrifft die Erfindung eine Vorrichtung zur Dichtigkeitskontrolle eines entsprechenden Behältnisses.

Bei dem genannten Behältnis kann es sich beispielsweise um eine Tube aus Kunststoff oder aus seinem Aluminium-Kunststoff-Laminat handeln, die üblicherweise an ihrem einen Ende mittels eines Deckels oder einer Kappe und an ichrem entgegengesetzten Ende mittels einer quer oder senkrecht zur Längserstreckung der Tube verlaufenden Schweißnaht verschlossen ist. Das Behältnis kann jedoch auch ein aus Kunststofffolie oder aus dem genannten Laminat bestehender Beutel und insbesondere ein sogenannter Schlauchbeutel sein, der an seinen beiden entgegengesetzten axialen Enden jeweils über eine quer zur Längserstreckung verlaufende Schweißnaht verschlossen ist. Im Folgenden soll beispielhaft davon ausgegangen werden, dass es sich bei dem Behältnis um eine Tube handelt, jedoch ist die Erfindung darauf nicht beschränkt.

Tuben dienen überwiegend zur Aufnahme von pastösen Produkten, beispielsweise einer Creme, die der Benutzer nach Öffnen eines Verschlusses durch Aufbringen einer äußeren Druckkraft auf der Tube herausdrückt. Wenn die die Tube an ihrem hinteren Ende verschließende Schweißnaht undicht ist, tritt dabei das Problem auf, dass dort das Produkt ebenfalls in unerwünschter Weise austritt. Um dies zu verhindern, ist es bekannt, die Prozessparameter genau zu überwachen und die Tuben nach dem Füllen und Verschließen auf ihre Dichtigkeit zu überprüfen, da undichte Tuben für den Hersteller am Markt zu einem hohen Imageschaden und zusätzlichen Kosten führen.

Die Dichtigkeit einer Tube wird üblicherweise stichprobenartig geprüft. Dazu wird eine verschlossene Tube der Tubenfüllmaschine bzw. dem Füllprozess entnommen und in einem separaten Versuchsstand im Tubeninneren mit einem Überdruck mittels Druckluft beaufschlagt. Zu diesem Zweck muss der Tubenverschluss vorher geöffnet werden, wodurch die Tube unverkäuflich wird und nach der Überprüfung entsorgt werden muss.

Alternativ wird auf die Tubenwandung von außen eine Druckkraft ausgeübt und dann detektiert, ob sich die Schweißnaht öffnet und das Produkt austritt. Wenn das Produkt austritt, muss der Versuchsstand gesäubert werden. Eine entsprechende Säuberung ist zeit- und kostenaufwändig.

Ein grundsätzlich anderes Verfahren zur Dichtigkeitskontrolle einer Tube besteht darin, zusammen mit dem Produkt ein Testgas in die Tube einzubringen und in dieser einzuschließen. Mittels einer Prüfsonde wird anschließend detektiert, ob das Prüfgas aus dem Innenraum der Tube austritt. Die Kosten einer entsprechenden Vorrichtung sind infolge der relativ teuren Sensorik und auch infolge der relativ großen Menge an benötigtem Testgas sehr hoch. Darüber hinaus arbeitet das Verfahren relativ langsam, so dass die Leistung einer entsprechenden Tubenfüllmaschine herabgesetzt ist. Bei empfindlichen und hochwertigen Produkten ist es häufig nicht erwünscht, das Testgas mit in die Tube einzuschweißen und damit das Produkt der Wirkung des Testgases auszusetzen. Darüber hinaus wird auf diese Weise nur die Gasdichtigkeit der Tube geprüft und es wird nicht berücksichtigt, welche Belastungen ein Benutzer der Tube bei Geberauch auf diese aufbringt.

Die GB 2 055 736 A, von der im Oberbegriff des Anspruchs 1 ausgegangen wird, zeigt eine Verschlussvorrichtung für einen Schlauchbeutel, wobei der Schlauchbeutel am oberen Ende zwischen zwei Verschlussbacken eingeklemmt und verschlossen wird. Die Verschlussbacken bilden eine Naht, die in einem nachfolgenden Verfahrensschritt mittels eines Messers durchtrennt wird.

An der Unterseite der Verschlussbacken ist jeweils ein Druckfinger angeordnet, wobei mit den Druckfingern beim Verschließen des Schlauchbeutels, d.h. dem Ausbilden der Naht von der Außenseite des Schlauchbeutels eine Druckkraft auf diesen ausgeübt wird. Wenn der Schlauchbeutel dicht verschlossen ist, ist den Druckfingern ein Widerstand entgegengesetzt, was von einem Sensor erfasst wird. Wenn der Schlauchbeutel undicht ist, ist der den Druckfingern entgegengesetzte Widerstand wesentlich geringer oder nicht vorhanden, so dass der Sensor bzw. der entsprechende Schalter nicht schließt.

Die JPH 05281079 zeigt eine Vorrichtung zur Dichtigkeitskontrolle eines Behältnisses gemäß dem Oberbegriff des Anspruchs 9.

Der Erfindung liegt die Aufgabe zugrunde, ein Verfahren zur Dichtigkeitskontrolle eines Behältnisses und insbesondere einer Tube zu schaffen, mit dem ein undichtes Behältnis sicher erkannt wird und bei dem ein Austreten des Produkts verhindert ist.

Desweiteren soll eine Vorrichtung geschaffen werden, mit der sich das Verfahren in einfacher Weise ausführen lässt.

Die genannte Aufgabe wird hinsichtlich des Verfahrens mit den Merkmalen des Anspruchs 1 gelöst. Dabei ist vorgesehen, dass die Schweißnaht vor der Erhöhung des Innendrucks in einem Teilbereich ihrer Fläche, der einen Abstand von dem dem Innenraum zugewandten Ende der Schweißnaht aufweist, zwischen Klemmelementen, beispielsweise Klemmbacken, fest und dichtend eingeklemmt wird.

Die Erfindung geht von der Grundüberlegung aus, die Tube auf Dichtigkeit möglichst unter Bedingungen zu überprüfen, die dem bestimmungsgemäßen Gebrauch der Tube nahe kommen. Aus diesem Grunde wird erfindungsgemäß auf die Tube durch äußere Einwirkung insbesondere einer Druckkraft eine Verformung aufgebracht. Wenn die Tube eine fehlerhafte oder bereits undichte Schweißnaht besitzt, könnte sich die Schweißnaht öffnen und das Produkt an dieser Öffnung austreten. Dies wird dadurch verhindert, dass die Schweißnaht vor der Erhöhung des Innendrucks eingeklemmt wird. Jedoch erfolgt die Klemmung nicht über die gesamte Fläche der Schweißnaht, sondern nur in einem relativ kleinen Teilbereich ihrer Fläche, der von dem dem Innenraum zugewandten Ende der Schweißnaht beabstandet ist. Bei einer fehlerhaften Schweißnaht wird sich diese nach der Erhöhung des Innendrucks zunächst an ihrem an den Innenraum angrenzenden Ende öffnen oder abschälen, wobei das Aufweiten oder Abschälen der Schweißnaht jedoch nur bis zu dem durch die Klemmelemente gehaltenen Teilbereich der Schweißnaht erfolgen kann. Auf diese Weise ist durch die Klemmung der Schweißnaht sichergestellt, dass auch bei einer fehlerhaften Schweißnaht kein Produkt infolge der Erhöhung des Innendrucks austreten und die Umgebung verschmutzen kann.

Je nach den Eigenschaften des Produkts und insbesondere der Viskosität des Produktes kann es ausreichend sein, die Schweißnaht nur in Teilbereichen ihrer quer oder senkrecht zur Längserstreckung der Tube verlaufenden Länge einzuklemmen. Erfindungsgemäß ist jedoch vorgesehen, dass die Schweißnaht über ihre gesamte Länge eingeklemmt wird.

Damit eine fehlerhafte Schweißnaht sich bei Erhöhung des Innendrucks öffnen kann, muss ein an den Innenraum der Tube angrenzender Bereich der Schweißnaht von den Klemmelementen frei bzw. nicht geklemmt sein. Je größer dieser freie Bereich ist, desto leichter lässt sich die Verformung bzw. das Öffnen der Schweißnaht feststellen. Aus diesem Grund kann in Weiterbildung der Erfindung vorgesehen sein, dass die Schweißnaht in ihrem dem Innenraum abgewandten Endbereich eingeklemmt wird.

Die Verformung der Schweißnaht bei Erhöhung des Innendrucks kann mittels eines optischen Sensors, beispielsweise einer Kamera erfasst werden. In bevorzugter Ausgestaltung der Erfindung ist jedoch vorgesehen, dass die Dicke der Schweißnaht in einem Querschnitt zwischen dem geklemmten Teilbereich und dem dem Innenraum zugewandten Ende der Schweißnaht erfasst und mit einem SOLL-Wert verglichen wird. Wenn eine fehlerhafte Schweißnaht sich bei Erhöhung eines Innendrucks öffnet bzw. abschält, steigt die Dicke der Schweißnaht stark an. Dies lässt sich in zuverlässiger Weise erfassen. Erfindungsgemäß können dazu Abstandsmesser vorgesehen sein, die auf entgegengesetzten Seiten der Schweißnaht angeordnet sind. Jeder Abstandsmesser, bei dem es sich beispielsweise um eine Laser-Messvorrichtung handeln kann, misst den Abstand, den die ihm zugewandte Seite der Schweißnaht von ihm besitzt. Da der gegenseitige Abstand der Abstandsmesser bekannt ist, lässt sich aus den gemessenen Abstandswerten die Dicke der Schweißnaht ermitteln. Wenn diese Dicke über einem vorbestimmten Grenzwert liegt, deutet das darauf hin, dass sich die Schweißnaht in diesem Querschnitt geöffnet hat und somit fehlerhaft ist. Eine auf diese Weise als fehlerhaft erkannte Tube wird in einer nachfolgenden Arbeitsstation aus dem Produktionsprozess herausgenommen. Auf diese Weise ist es möglich, jede Tube zu überprüfen und sicherzustellen, dass fehlerhafte Tuben ausgeschieden werden.

Der Innendruck in dem Innenraum des Behältnisses wird vorzugsweise durch Zusammendrücken des Behältnisses mittels einer äußeren Druckkraft erhöht. Dabei kann eine konstante äußere Druckkraft oder eine sich über die Zeit verändernde äußere Druckkraft, beispielsweise eine sich erhöhende Druckkraft aufgebracht werden. Dabei sollte der Innendruck in dem Innenraum des Behältnisses auf einen Wert von zumindest 2 bar erhöht werden, d.h. einen Überdruck von ca. 1 bar gegenüber der umgebenden Atmosphäre aufweisen. Vorzugsweise beträgt der Innendruck zumindest 2,5 bar und insbesondere zumindest 3,0 bar.

Es hat sich gezeigt, dass ein Öffnen oder Abschälen einer fehlerhaften Schweißnaht gegebenenfalls erst dann eintritt, wenn der erhöhte Innendruck über eine relativ lange Zeitdauer von einigen Sekunden auf die Schweißnaht einwirkt. Erfindungsgemäß kann deshalb vorgesehen sein, dass der Innendruck in den Innenraum des Behältnisses für eine Dauer von zumindest 10s und insbesondere für eine Dauer von zumindest 20s erhöht wird. Wenn eine Schweißnaht nach diesen relativ langen Einwirkzeiten des erhöhten Innendrucks keine Verformung bzw. kein Öffnen oder Abschälen zeigt, kann davon ausgegangen werden, dass die Schweißnaht in Ordnung ist.

Wenn die Parameter des Schweißvorganges, durch den die Schweißnaht gebildet und die Tube verschlossen wird, fehlerhaft eingestellt sind, kann es passieren, dass das Kunststoff-Material der Tube beim Schweißvorgang übermäßig schmilzt und die Tubenwandung zerstört wird. Eine derartig verformte Tube ist üblicherweise sofort an ihrer äußeren Form zu erkennen, die von der äußeren Form einer normalen Tube deutlich abweicht. Diese deformierte Tube ist üblicherweise bereits undicht, bevor eine äußere Kraft aufgebracht wird. Dabei sollte eine entsprechend deformierte Tube nicht der erläuterten Dichtigkeitskontrolle unterworfen werden, da dann das in der Tube befindliche Produkt trotz der Klemmung der Schweißnaht austreten könnte. Aus diesem Grunde kann in Weiterbildung der Erfindung vorgesehen sein, dass die äußere Form des Behältnisses bzw. der Tube vor der Erhöhung des Innendrucks mittels einer Sensoroptik zumindest teilweise erfasst und mit einer SOLL-Form verglichen wird. Wenn die äußere Form einer Tube stark von der üblichen SOLL-Form einer Tube abweicht, wird die Tube sofort aus dem Prozess herausgenommen und ausgeschleust, so dass verhindert ist, dass diese offensichtlich fehlerhafte Tube einer weiteren Prüfung unterzogen wird.

Die Sensoroptik kann die äußere Form der gesamten Tube erfassen und überprüfen, üblicherweise ist es jedoch ausreichend, wenn die äußere Form der Tube nur im Bereich der Schweißnaht erfasst und mit der SOLL-Form der Schweißnaht verglichen wird.

In seltenen Ausnahmefällen kann es passieren, dass durch Aufbringen eines erhöhten Innendrucks in dem Innenraum der Tube nicht die Schweißnaht versagt und verformt wird, sondern dass die Tube an einer anderen Stelle der Tubenwandung eine fehlerhafte Stelle, beispielsweise eine Schwachstelle oder sogar ein Loch besitzt, an dem das Produkt austritt. Um auch derartige Tuben sicher zu detektieren und auszuschleusen, kann in Weiterbildung der Erfindung vorgesehen sein, dass die Tube in einer nachgeschalteten Arbeitsstation gewogen wird, wodurch ein Füllgut- oder Produktverlust und somit eine Undichtigkeit festgestellt werden kann.

Hinsichtlich der Vorrichtung wird die oben genannte Aufgabe durch eine Vorrichtung mit den Merkmalen des Anspruchs 9 gelöst. Dabei sind eine 1. Klemmvorrichtung, mittels der die Schweißnaht in einem Teilbereich ihrer Fläche einklemmbar ist, eine 2. Klemmvorrichtung, mittels der auf das Behältnis eine äußere Druckkraft zur Erhöhung des Innendrucks in dem Innenraum des Behältnisses aufbringbar ist, und eine Sensorvorrichtung vorgesehen, mittels der die Dicke der Schweißnaht erfassbar ist. Dabei umfasst die Sensorvorrichtung zumindest zwei Abstandsmesser, die auf entgegengesezten Seiten der Schweißnaht angeordnet sind. Die 1. Klemmvorrichtung ist dazu ausgebildet, die Schweißnaht über ihre gesamte Länge in einem Teilbereich ihrer Fläche einzuklemmen.

Weitere Merkmale der erfindungsgemäßen Vorrichtung ergeben sich aus der bisherigen und der folgenden Beschreibung des erfindungsgemäßen Verfahrens, worauf zwecks Vermeidung von Wiederholungen ausdrücklich verwiesen wird.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: Ein Querschnitt durch den oberen Bereich einer Tube einschließlich einer Schweißnaht vor Beginn der Dichtigkeitskontrolle,
- Fig. 2: eine Figur 1 entsprechende Darstellung nach Klemmung der Schweißnaht,
- Fig. 3: eine Figur 2 entsprechende Darstellung nach Aufbringen einer äußeren Druckkraft,
- Fig. 4: eine Figur 3 entsprechende Darstellung bei Beginn des Öffnens bzw. Aufschälens der Schweißnaht,
- Fig. 5: eine Figur 4 entsprechende Darstellung mit einer bis zur Klemmvorrichtung offenen Schweißnaht und
- Fig. 6: eine Figur 5 entsprechende Darstellung bei der Bestimmung der Nahtdicke.

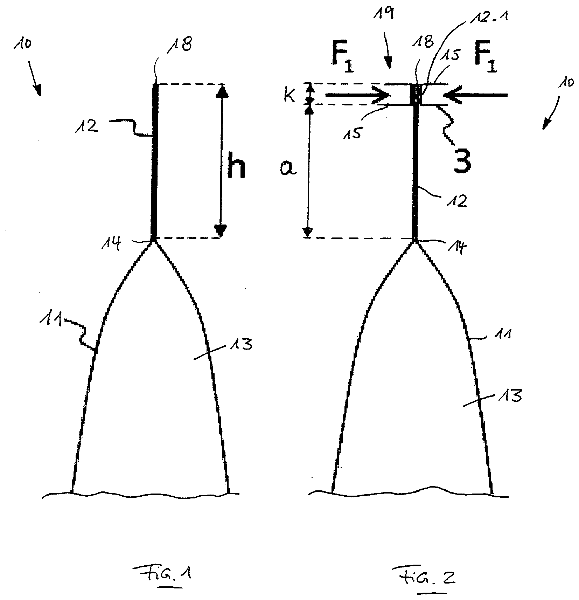

Figur 1 zeigt einen Querschnitt eines oberen Bereichs eines Behältnisses 10 in Form einer Tube, die eine aus Kunststoff bestehende Hülle 11 besitzt, die einen Innenraum 13 umschließt, wobei die Hülle 11 an ihrem oberen Ende über eine senkrecht zur Längserstreckung der Tube 10 und senkrecht zur Zeichenebene verlaufende Schweißnaht 12 verschlossen ist. Die Schweißnaht 12 besitzt in axialer Längsrichtung der Tube 10 zwischen ihrem unterem, dem Innenraum 13 zugewandten Ende 14 und ihrem oberen, dem Innenraum 13 abgewandten Ende 18 eine Höhe h. In dem Innenraum 13 der Tube 10 befindet sich ein nicht dargestelltes Produkt, beispielsweise eine Creme.

Um die Tube 10 auf ihre Dichtigkeit zu überprüfen, wird die Schweißnaht 12 gemäß Figur 2 in ihrem dem Innenraum 13 abgewandten Endbereich 12.1 zwischen backenartigen Klemmelementen 15, die eine 1. Klemmvorrichtung 19 bilden, unter Aufbringung einer äußeren Klemmkraft F₁ eingeklemmt. Wesentlich dabei ist, dass zwischen dem geklemmten Bereich 12.1 und dem dem Innenraum 13 zugewandten Ende 14 der Schweißnaht 12 ein ausreichender freier, nicht geklemmter Bereich der Schweißnaht verbleibt. Im dargestellten Ausführungsbeispiel wird die Schweißnaht 1 über eine Höhe k geklemmt, während eine Höhe a der Schweißnaht 12 frei bleibt, wobei gilt: a ≥ k. Insbesondere ist vorgesehen, dass die Höhe a des freien, nicht geklemmten Bereichs zumindest doppelt so groß wie die Höhe k des geklemmten Bereichs 12.1 ist, d.h. a≥2k. Alternativ kann jedoch auch vorgesehen sein, dass die freie Höhe a der Schweißnaht 12 kleiner als die Höhe k des geklemmten Bereichs 12.1 ist, d.h. a≤k. Vorzugsweise gilt: a≤k≤2a.

Die backenartigen Klemmelemente 15 werden mit der Druckkraft F₁ gegeneinander gedrückt und klemmen den Bereich 12.1 der Schweißnaht 12 sicher und über die gesamte Länge der Schweißnaht 12 senkrecht zur Zeichenebene ein.

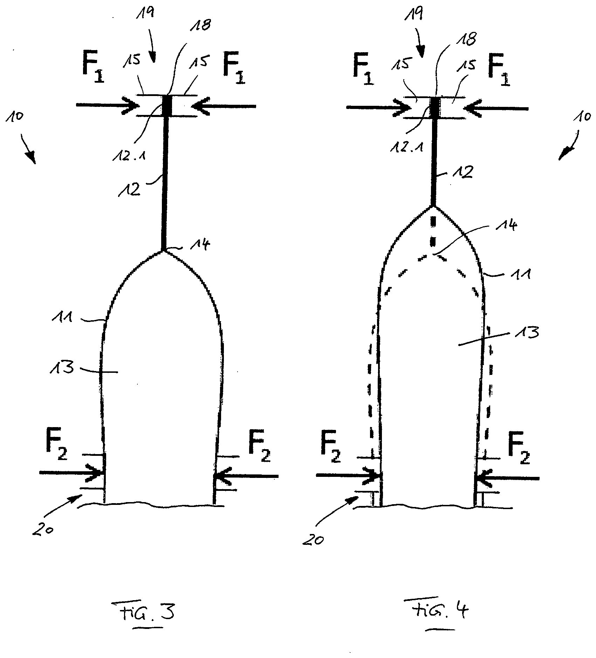

In einem nachfolgenden, in Figur 3 dargestellten Verfahrensschritt wird auf die den Innenraum 13 begrenzende Hülle 11 von zumindest zwei entgegengesetzen Seiten mittels einer nur schematisch angedeuteten 2. Klemmvorrichtung 20 eine äußere Druckkraft F₂ aufgebracht, wodurch der Innendruck in dem Innenraum 13 der Tube 10 auf einen absoluten Wert von ca. 2 bar erhöht wird. Dieser Zustand ist in Figur 3 dargestellt.

Wenn die Schweißnaht 12 ordnungsgemäß ausgebildet und dicht ist, behält sie ihre Form trotz der Erhöhung des Innendrucks bei, wie es in Figur 4 gestrichelt dargestellt ist. Wenn die Schweißnaht 12 fehlerhaft ist, beginnt sie sich an ihrem unterem, dem Innenraum 13 zugewandten Ende 14 zu öffnen bzw. abzuschälen, wie es in Figur 4 gezeigt ist.

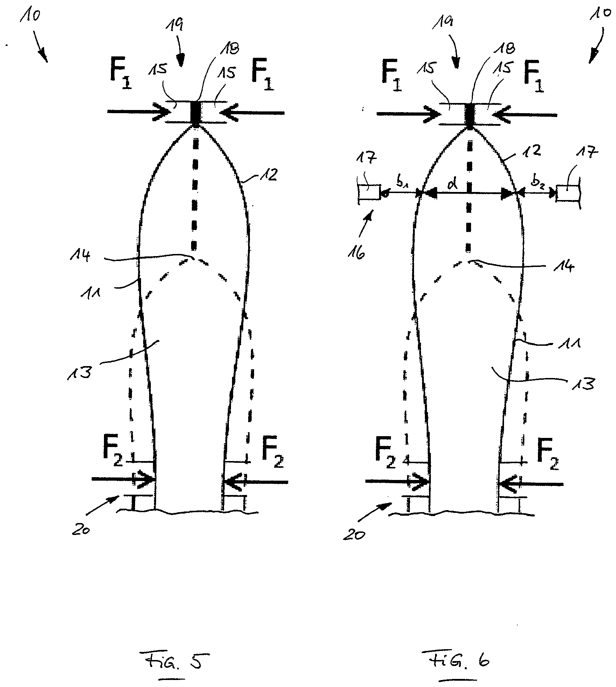

Die Erhöhung des Innendrucks in dem Innenraum 13 mittels der äußeren Druckkraft F₂ wird für eine relativ lange Zeit Dauer von zumindest 10s und insbesondere 20s aufrechterhalten. Dies führt üblicherweise dazu, dass die Schweißnaht 12, wenn sie fehlerhaft ist, sich bis auf den zwischen den Klemmelementen 15 eingeklemmten Bereich 12.1 vollständig öffnet, wie es in Figur 5 gezeigt ist.

Zur Erfassung der Deformation oder der Dicke d der Schweißnaht 12 ist eine Sensorvorrichtung 16 vorgesehen, die gemäß Figur 6 zwei auf entgegegengesetzten Seiten der Schweißnaht 12 angeordnete Abstandsmesser 17 insbesondere in Form von Laser-Messeinrichtungen aufweist. Jeder Abstandsmesser 17 kann den Abstand messen, den die Wandung der Schweißnaht 12 zu dem jeweiligen Abstandsmesser 17 besitzt. Die genannten Abstände sind in Figur 6 mit b₁ und b₂ bezeichnet. Da der gegenseitige Abstand der Abstandsmesser 17 bekannt ist, lässt sich in einfacher Weise die Dicke d der Schweißnaht 12 bestimmen, die diese in dem von den Abstandsmessern 17 gemessenen Querschnitt besitzt. Die Dicke d der Schweißnaht 12 wird mit einem SOLL-Wert verglichen und wenn festgestellt wird, dass die gemessene Dicke d der Schweißnaht 12 oberhalb eines vorgegebenen Grenzwertes von dem SOLL-Wert abweicht, wird die Tube als fehlerhaft eingestuft und in einem nachfolgenden Verfahrensschritt ausgesondert.

## Patentansprüche

1. Verfahren zur Dichtigkeitskontrolle eines Behältnisses (10), das eine schlauch- oder rohrförmige Hülle (11) aufweist, die gegenüber der umgebenden Atmosphäre verschlossen ist und an zumindest einem Ende eine Schweißnaht (12) besitzt, wobei der Innendruck in einem Innenraum (13) des Behältnisses (10) durch äußere Einwirkung erhöht und die sich dabei einstellende Verformung der Schweißnaht (12) erfasst wird, **dadurch gekennzeichnet, dass** die Schweißnaht (12) vor der Erhöhung des Innendrucks nur in einem Teilbereich (12.1) ihrer Fläche, der einen Abstand von dem dem Innenraum (13) zugewandten Ende (14) der Schweißnaht (12) aufweist, über ihre gesamte Länge zwischen Klemmelementen (15) eingeklemmt wird.

2. Verfahren nach Anspruch 1, **dadurch gekennzeichnet, dass** die Schweißnaht (12) in ihrem dem Innenraum (13) abgewandten Endbereich eingeklemmt wird.

3. Verfahren nach Anspruch 1 oder 2, **dadurch gekennzeichnet, dass** die Dicke (d) der Schweißnaht (12) in einem Querschnitt zwischen dem geklemmten Teilbereich (12.1) und dem dem Innenraum (13) zugewandten Ende (14) der Schweißnaht (12) mittels zumindest einer Sensorvorrichtung (16) erfasst und mit einem SOLL-Wert verglichen wird.

4. Verfahren nach Anspruch 3, **dadurch gekennzeichnet, dass** auf entgegengesetzten Seiten der Schweißnaht (12) jeweils ein Abstandsmesser (17) angeordnet ist.

5. Verfahren nach einem der Ansprüche 1 bis 4, **dadurch gekennzeichnet, dass** der Innendruck in dem Innenraum (13) des Behältnisses (10) durch Zusammendrücken des Behältnisses (10) mittels einer äußeren Druckkraft (F₂) erhöht wird.

6. Verfahren nach einem der Ansprüche 1 bis 5, **dadurch gekennzeichnet, dass** der Innendruck in dem Innenraum (13) des Behältnisses (10) auf einen absoluten Wert von zumindest 2bar erhöht wird.

7. Verfahren nach einem der Ansprüche 1 bis 6, **dadurch gekennzeichnet, dass** der Innendruck in dem Innenraum (13) des Behältnisses (10) für eine Dauer von zumindest 10s erhöht wird.

8. Verfahren nach einem der Ansprüche 1 bis 7, **dadurch gekennzeichnet, dass** die äußere Form des Behältnisses (10) vor der Erhöhung des Innendrucks mittels einer Sensoroptik zumindest teilweise erfasst und mit einer SOLL-Form verglichen wird.

9. Vorrichtung zur Dichtigkeitskontrolle eines Behältnisses (10), das eine schlauch- oder rohrförmige Hülle (11) aufweist, die gegenüber der umgebenden Atmosphäre verschlossen ist und an zumindest einem Ende eine Schweißnaht (12) besitzt, wobei die Vorrichtung folgende Merkmale umfasst:
eine 1. Klemmvorrichtung (19), mittels der die Schweißnaht (12) einklemmbar ist, eine 2. Klemmvorrichtung (20), mittels der auf das Behältnis (10) eine äußere Druckkraft (F₂) zur Erhöhung des Innendrucks in den Innenraum (13) des Behältnisses (10) aufbringbar ist, und
eine Sensorvorrichtung (16), mittels der die Dicke (d) der Schweißnaht (12) erfassbar ist, wobei die Sensorvorrichtung (16) zumindest zwei Abstandsmesser (17) umfasst, die auf entgegengesetzten Seiten der Schweißnaht (12) angeordnet sind, **dadurch gekennzeichnet, dass** die 1. Klemmvorrichtung (19) dazu ausgebildet ist, die Schweißnaht (12) über ihre gesamte Länge in einem Teilbereich (12.1) ihrer Fläche einzuklemmen.

## Claims

1. Process for the tightness check of a container (10) which has a tube-like or tubular shell (11) which is sealed against the surrounding atmosphere and has a weld seam (12) at at least one end, whereby the internal pressure is increased in an interior space (13) of the container (10) by external action and the thereby ensuing deformation of the weld seam (13) is detected, **characterized in that** the weld seam (12) is clamped over its entire length between clamping elements (15) before the increase in the internal pressure only in a partial area (12.1) of its surface, which has a distance from the end (14) of the weld seam (12) facing the interior space (13).

2. Process in accordance with claim 1, **characterized in that** the weld seam (12) is clamped in its end area facing away from the interior space (13).

3. Process in accordance with claim 1 or 2, **characterized in that** the thickness (d) of the weld seam (12) in a cross section between the clamped partial area (12.1) and the end (14) of the weld seam (12) facing the interior space (13) is detected by means of at least one sensor device (16) and is compared with a DESIRED value. 13.

4. Process in accordance with claim 3, **characterized in that** a distance measuring device (17) is arranged on the opposite sides of the weld seam (12), respectively.

5. Process in accordance with one of the claims 1 through 4, **characterized in that** the internal pressure in the interior space (13) of the container (10) is increased by means of squeezing the container (10) by means of an external force of pressure (F₂).

6. Process in accordance with one of the claims 1 through 5, **characterized in that** the internal pressure in the interior space (13) of the container (10) is increased to an absolute value of at least 2 bar.

7. Process in accordance with one of the claims 1 through 6, **characterized in that** the internal pressure in the interior space (13) of the container (10) is increased for a duration of at least 10 sec.

8. Process in accordance with one of the claims 1 through 7, **characterized in that** the outer shape of the container (10) before the increase in the internal pressure is at least partially detected by means of a sensor optical system and compared with a DESIRED shape.

9. Device for the tightness check of a container (10), which has a tube-like or tubular shell (11) which is sealed against the surrounding atmosphere and has a weld seam at at least one end, wherein the device comprises the following features:
a first clamping system (19), by means of which the weld seam (12) can be clamped, a second clamping system (20), by means of which an external force of pressure (F₂) can be applied to the container (10) for increasing the internal pressure in the interior space (13) of the container (10), and a sensor device (16), by means of which the thickness (d) of the weld seam (12) can be detected, wherein the sensor device (16) comprises at least two distance measuring devices (17), which are arranged on opposite sides of the weld seam (12),
**characterized in that** the first clamping system (19) is constructed to clamp the weld seam (12) over its entire length in a partial area (12.1) of it surface.

## Revendications

1. Procédé de contrôle d'étanchéité d'un récipient (10) comportant une enveloppe (11) en forme de tuyau flexible ou de tube fermée par rapport à l'atmosphère alentour et possédant un joint de soudure (12) au niveau d'au moins une extrémité, la pression intérieure étant accrue par action extérieure dans un espace intérieur (13) du récipient (10) et la déformation ainsi engagée du joint de soudure (12) étant détectée, **caractérisé en ce que** le joint de soudure (12) n'est coincé, avant l'augmentation de la pression intérieure, que dans une région partielle (12.1) de sa surface par rapport à l'ensemble de la longueur totale se trouvant entre les éléments de serrage (15), cette région se situant à une certaine distance par rapport à l'extrémité (14) du joint de soudure (12) orientée vers l'espace intérieur (13).

2. Procédé selon la revendication 1, **caractérisé en ce que** le joint de soudure (12) est coincé dans sa zone d'extrémité opposée à l'espace intérieur (13).

3. Procédé selon la revendication 1 ou 2, **caractérisé en ce que** l'épaisseur (d) du joint de soudure (12) est détectée à l'aide d'au moins un dispositif de détection (16) dans une section transversale située entre la région partielle (12.1) coincée et l'extrémité (14) du joint de soudure (12) orientée vers l'espace intérieur (13) et que cette épaisseur est comparée à une valeur théorique.

4. Procédé selon la revendication 3, **caractérisé en ce qu'**un appareil de mesure de distance (17) est respectivement disposé sur les côtés opposés du joint de soudure (12).

5. Procédé selon l'une quelconque des revendications 1 à 4, **caractérisé en ce que** la pression intérieure est augmentée dans l'espace intérieur (13) du récipient (10) par compression du récipient (10) au moyen d'une force de pression (F₂) extérieure.

6. Procédé selon l'une quelconque des revendications 1 à 5, **caractérisé en ce que** la pression intérieure est augmentée dans l'espace intérieur (13) du récipient (10) pour atteindre une valeur absolue d'au moins 2 bars.

7. Procédé selon l'une quelconque des revendications 1 à 6, **caractérisé en ce que** la pression intérieure est augmentée dans l'espace intérieur (13) du récipient (10) pendant une durée d'au moins 10 s.

8. Procédé selon l'une quelconque des revendications 1 à 7, **caractérisé en ce que** la forme extérieure du récipient (10) est détectée au moins en partie avant l'augmentation de la pression intérieure au moyen d'un système optique et est comparée à une forme théorique.

9. Dispositif de contrôle d'étanchéité d'un récipient (10) comportant une enveloppe (11) en forme de tuyau flexible ou de tube fermée par rapport à l'atmosphère alentour et possédant un joint de soudure (12) au niveau d'au moins une extrémité, le dispositif comprenant les caractéristiques suivantes :
un 1^{er} dispositif de serrage (19) à l'aide duquel le joint de soudure (12) peut être coincé, un 2^{e} dispositif de serrage (20) à l'aide duquel une force de pression (F2) extérieure peut être appliquée sur le récipient (10) en vue d'accroître la pression intérieure dans l'espace intérieur (13) du récipient (10) et un dispositif de détection (16) à l'aide duquel l'épaisseur (d) du joint de soudure (12) peut être détectée, le dispositif de détection (16) comprenant au moins deux appareils de mesure de distance (17) disposés sur les côtés opposés du joint de soudure (12), **caractérisé en ce que** le 1^{er} dispositif de serrage (19) est réalisé pour coincer le joint de soudure (12) sur l'ensemble de sa longueur dans une région partielle (12.1) de sa surface.
